Europäisches Patentamt

European Patent Office

Office européen des brevets

(19)

(11) Publication number:  **0 043 739**
**B1**

(12) **EUROPEAN PATENT SPECIFICATION**

(45) Date of publication of patent specification: **17.07.85**

(21) Application number: **81303142.4**

(22) Date of filing: **09.07.81**

(51) Int. Cl.⁴: **G 11 B 5/58, G 11 B 21/10** // **H04N5/783**

(54) **Tracking system.**

(30) Priority: **09.07.80 JP 94424/80**

(43) Date of publication of application:
**13.01.82 Bulletin 82/02**

(45) Publication of the grant of the patent:
**17.07.85 Bulletin 85/29**

(84) Designated Contracting States:
**DE FR GB**

(56) References cited:
**EP-A-0 030 469**
**DE-A-2 647 430**
**GB-A-2 031 640**
**GB-A-2 053 509**
**US-A-4 007 490**

**JOURNAL OF THE SOCIETY OF MOTION
PICTURE AND TELEVISION ENGINEERS vol.
83, no. 2, February 1974, New York, US
MORGAN "The servo-system for a helical
broadcast recorder", pages 105-109**

**IEEE TRANSACTIONS ON CONSUMER
ELECTRONICS, vol. CE-26, no. 1, February
1980, New York, US AZUMA et al.
"Microprocessor controlled variable play-
backspeed system for video tape recorder"
pages 121-128**

(73) Proprietor: **Matsushita Electric Industrial Co.,
Ltd.**
**1006, Oaza Kadoma**
**Kadoma-shi Osaka-fu, 571 (JP)**

(72) Inventor: **Takeuchi, Akihiro**
**128-37, Tsukimi-cho Higashiikoma**
**Ikoma-shi Nara-ken (JP)**
Inventor: **Kobayashi, Masaaki**
**1-17-2, Uguisudai Kawanishi-shi**
**Hyogo-ken (JP)**
Inventor: **Fujisawa, Kiyoji**
**385-44 Deaiotsubo Daianji-cho**
**Nara-shi Nara-ken (JP)**

(74) Representative: **Crawford, Andrew Birkby et al
A.A. THORNTON & CO. Northumberland House
303-306 High Holborn
London WC1V 7LE (GB)**

EP 0 043 739 B1

## Description

This invention generally relates to a tracking system which is employed in a video tape recorder/reproducer, and more particularly to a system for generating a displacing pattern signal applied to a positionable element on which a video head is mounted so as to maintain the video head in substantially undeviating condition with respect to a recorded video track.

Recently, an automatic tracking system has been introduced to a video tape recorder/reproducer. Such system makes possible a proper tracking of the video track recorded on a video tape, reproducing no noise band pictures at any tape speed modes, for example, normal speed mode, slow motion mode, still motion mode, quick motion mode, reverse motion mode and so on.

In the conventional automatic tracking system, video heads are mounted on positionable elements such as piezoelectric element. The positionable element is dithered by a signal from an oscillator. The tracking error signals are detected from the envelope of reproduced signals. According to resultant tracking error signal, a negative feedback (NFB) loop controls the positionable element so that the video head properly follows the recorded track.

In the case that the automatic tracking system described above is applied to a video recorder/reproducer employing a narrow video track width (for example, 20 micrometer), a displacing amplitude of the video head due to the dither signal is restricted within a few micrometers.

Accordingly, the tracking error signal obtained from the envelope signals become a signal having a very low SN ratio. For the improvement of low SN ratio, it is necessary to use a L.P.F. having a very low cutoff frequency in the NFB loop. As the transient response of the loop is limited by this L.P.F., some noise bars appear on the reproduced pictures during a reproduction mode-change.

An automatic tracking system concerning the above described problem is disclosed in British Patent Application GB—A—2,053,509.

This invention is to improve the system disclosed in British Patent Application 2,053,509 by providing an accurate and minimum displacing pattern signal for a tracking system having a positionable element whose dynamic range is limited by its own physical characteristics without regard to a tape speed and a video track width.

An automatic tracking system is also disclosed in British Patent Specification No. 2031640B. This specification discloses a tracking system for video recorders/reproducers employing a record medium having tracks for recording video signals and control signals which are representative of the record position of said video signals, said system comprising:

transducing means for reproducing video signals recorded along said track on said record medium;

positionable means with said transducing means mounted at a location thereon, said positionable means being movable at said location for displacing position of said transducing means;

control signal reproducing means to reproduce said control signals recorded along said track on said record medium;

means for dividing the interval between said control signals, said dividing means developing sub-control signals, the number of which is representative of the transported length of said record medium;

a rotating phase detector for detecting the rotating phase of said transducer means;

an operational means for developing a displacement pattern signal which is representative of the location of said video track recorded on said record medium against said transducing means by using said control signal, and the output signal of said rotating phase detector; and

means for supplying said displacement pattern signal to said positionable means, wherein said operational means comprises a counter unit, having a first counter which is reset by said control signals and counts said sub-control signals, and an adder.

However, the output value of the counter is sampled and held and is reset by the control pulse of the timings equal to the head switching timings. This causes some disadvantages. First, since the tracking information is delayed a half field period by the sampling and holding, the output signal of the sampling-and-holding circuit must be further corrected so as to be used as displacement pattern signal. Second, a rapid speed variation occurring within a field period cannot be corrected.

It is an object of the present invention to overcome these disadvantages.

The present invention provides a tracking system for video recorders/reproducers employing a record medium having tracks for recording video signals and control signals which are representative of the record position of said video signals, said system comprising:

transducing means for reproducing video signals recorded along said track on said record medium;

positionable means with said transducing means mounted at a location thereon, said positionable means being movable at said location for displacing position of said transducing means;

control signal reproducing means to reproduce said control signals recorded along said track on said record medium;

means for dividing the interval between said control signals, said dividing means developing sub-control signals, the number of which is representative of the transported length of said record medium;

a rotating phase detector for detecting the rotating phase of said transducing means;

an operational means for developing a displacement pattern signal which is representative of the location of said video track recorded on said record medium against said transducing means by using said control signal, said sub-control signal, and the output signal of said rotating phase detector; and

means for supplying said displacement pattern signal to said positionable means, wherein: said operational means comprises 1) a still pattern generator for developing a still pattern signal whose quantity is zero at beginning of scanning of said transducing means and whose quantity corresponds to one track pitch at end of scanning of said transducing means, 2) a counter unit for counting said sub-control signals and generating bias signals, and 3) an adder which adds the output signals of said still pattern generator and the output of said counter unit developing said displacing pattern signal; and

said counter unit has 1) a first counter which is reset by said control signals and counts said sub-control signals, 2) a second counter which is preset to a certain value m when an output signal of said first counter becomes larger than m and counts said sub-control signals, and 3) third counters each of which is preset to an output signal of said second counter at a certain timing and counts said sub-control signals, outputs of said third counters being applied to said adder, whereby said transducing means is capable of tracking properly on said recorded video track at an arbitrary transporting speed of said record medium.

In order that the present invention be more readily understood, embodiments thereof will now be described by way of example with reference to the accompanying drawings, in which:—

Figure 1 is a block diagram of a video tape recorder using a tracking system;

Figure 2 is a recorded track pattern of a magnetic tape;

Figure 3 (a)—(f) show signals appearing at various points of the tracking system drawn in Figure 1;

Figure 4 is a block diagram of an example of the operational circuit 33;

Figure 5(a)—(i) shows signals appearing at various points of the operation circuit 33;

Figure 6(a)—(i) shows another stage of signals appearing at same points as those of Figure 5; and

Figure 7 is a block diagram of a modified counter unit;

Figure 8(a)—(h) shows signals appearing at various points of the operational circuit 33 which includes the counter unit of Figure 7;

Figure 9 is a block diagram of another modified counter unit;

Figure 10(a)—(j) shows signals appearing at various points of the operational circuit 33 which includes the counter unit of Figure 9;

Figure 11 shows the range of the output signal of the operational circuit 33 which includes the counter unit of Figure 9;

Figure 12 is a block diagram of the counter unit used in this invention;

Figure 13(a)—(h) shows signals appearing at various points of the operational circuit 33 which includes the counter unit of Figure 12;

Figure 14 shows the relation of the data m and tape speed at the counter unit of Figure 12;

Figure 15 shows the range of the output signal of the operational circuit 33 which includes the counter unit of Figure 12 inputted the data m of Figure 14.

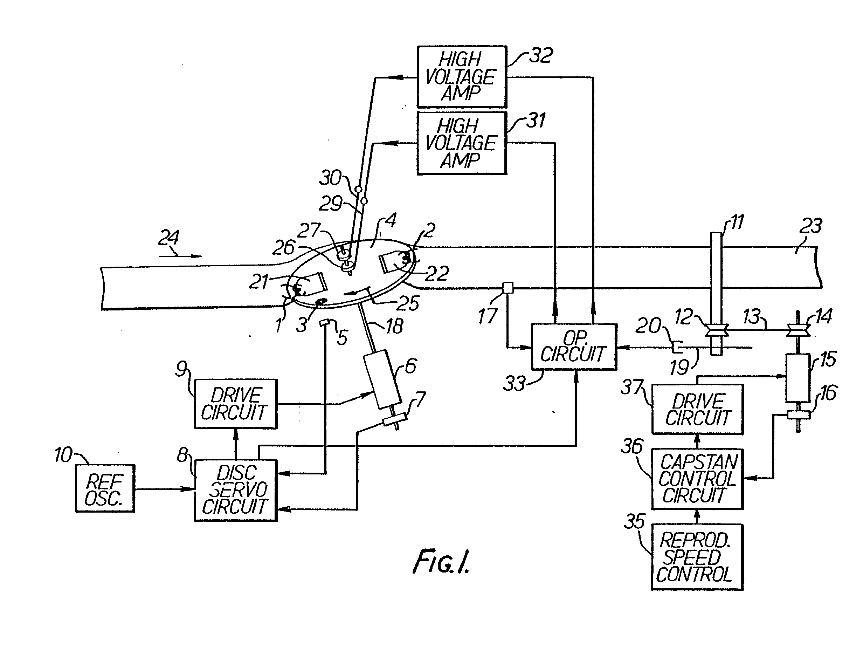

Figure 1 shows a construction of video tape recorder (reproducing mode) using the tracking apparatus disclosed in British Application G.B.—A—2,053,509. Video heads 1 and 2 have the same azimuth angular (for example 6°). The video heads 1 and 2 are mounted at the free end of positionable elements 21 and 22 (for example, bimorph type piezo electric elements). The other ends of elements 21 and 22 are fixed to a rotary disk 4. A magnet 3 indicates the rotating phase of the video heads 1 and 2, being attached to the rotary disk 4. A rotating phase detector 5, which is coupled to the magnet 3, is attached on the fixed side. The rotary disk 4 is driven by the DC motor 6, and the rotating direction is indicated by the arrow 25.

The output signal of a frequency generator (FG) 7, which is mounted at a shaft of a DC motor 6, is supplied to a disk servo circuit 8. The output signals of the rotating phase detector 5 and a reference oscillator 10 are supplied to a disk servo circuit 8. The output signal of the disk servo circuit 8 is supplied to the DC motor 6 through a drive circuit 9. By these means, the rotating phase control of the rotary disk 4 is achieved. The magnetic tape 23 is driven by a capstan 11 and a pinch-roller (not shown), and the driven direction is indicated by an arrow 24. The capstan 11 is driven by a DC motor 15 through a pulley 12, a belt 13, and a pulley 14. The output signal of a frequency generator (FG) 16 which indicates rotations of the DC motor 15, and the output signal of a reproduction tape speed controller 35 is supplied to a capstan control circuit 36.

The output signal of a control head 17 (hereafter, this signal will be designated as a control signal R), the output signal of the rotary phase detector 20 and the output signal P of the disk servo circuit 8 are supplied to the operational circuit 33. The rotating angular of the capstan 11 is detected by a combination of a disk having a number of slits 19 which is attached to the capstan 11 and a rotating phase detector 20. Then, this rotating phase detector 20 generates the pulse in proportion to the rotating angular of the capstan 11. For example, when the reproducing tape speed is the same as that at recording, assumption is made that the rotary phase detector 20 is chosen so as to generate 10 pulses during one period between the successive reproduced control signal R. As the rotating phase detector 20 generates the same 10 pulses regardless of the change of the reproducing tape speed, this means that a spacing period between the successive reproduced control signal R is divided into ten divisions effectively. Hereafter, the output pulses of the rotating phase detector 20 are called sub-control signals Q.

An embodiment of the rotating phase detector 20 described above is made up by a luminous body and a photo detector, and detects the light which passes through the slits on the disk 19, but the similar output signals are also obtained by employing a toothed wheel made by a magnetic material in place of the slit disk 19 and a magnetic flux detector in place of the detector 20.

The output signal of the operational circuit 33, which are displacement pattern, is supplied to the high voltage amplifiers 31 and 32, and amplified enough to drive the positionable elements 21 and 22. This amplified signals are supplied to the positionable elements 21 and 22 through conductive brushes 29 and 30, and slip rings 26 and 27. The slip rings are attached to a rotary shaft 18 of the DC motor 6, but it is electrically insulated from the shaft 18.

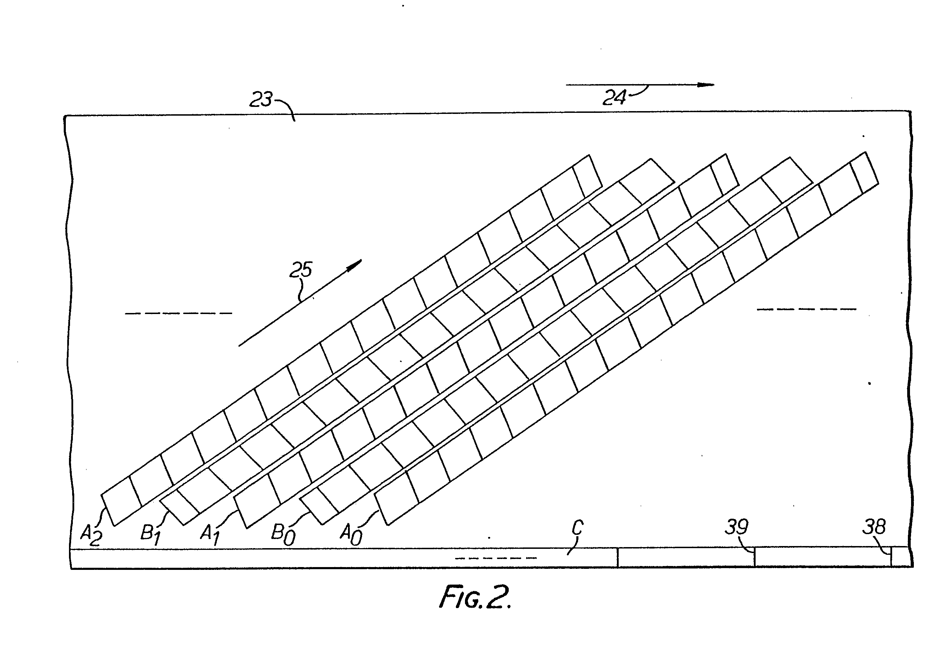

Fig. 2 shows the video track pattern recorded on the magnetic tape 23. $A_0$, $B_0$, $A_1$, $B_1$, and $A_2$ are one field video tracks of video signals, $A_0$, $A_1$ and $A_2$ tracks are recorded by one video head whose azimuth is $+6°$. $B_0$ and $B_1$ tracks are recorded by another video head whose azimuth is $-6°$. C is the control track. The control signals, which represent the recording phase of the video signals, are record on the control track C at the rate of one control signal every one picture frame. In the recording process, the starting point of $A_0$ track and the control signal 38 are recorded at the same time. The starting point of $A_1$ track and the control signal 39 are recorded at the same time.

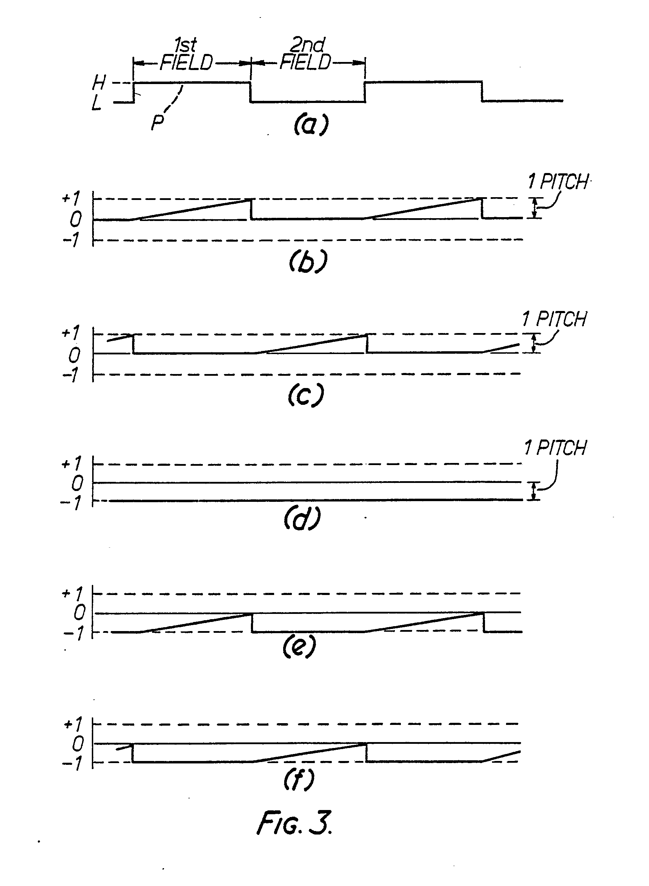

In the reproducing process, when the video head 1 is scanning the starting point of $A_1$ track, the control head 17 simultaneously reproduces the control signal 39. At that time, it is assumed that the transport magnetic tape 23 is stopped, then the trace end point of the video head 1 is the end point of the track $B_0$. This scanning period is called the first field. In order to reproduce pictures without noise-bar, the video head 1 must trace the $A_1$ track with on track condition from begining to end. By supplying the voltage increasing linearly with scanning as shown in Fig. 3(b) to the piezoelectric element 21 during the first field, the position of the video head 1 is linearly moved with scanning, then the video head being capable of following on the whole of the video track. This required movement quantity is zero at trace starting point of $A_1$ track and is one track pitch at trace end point. This pattern of movement quantity is called the still pattern.

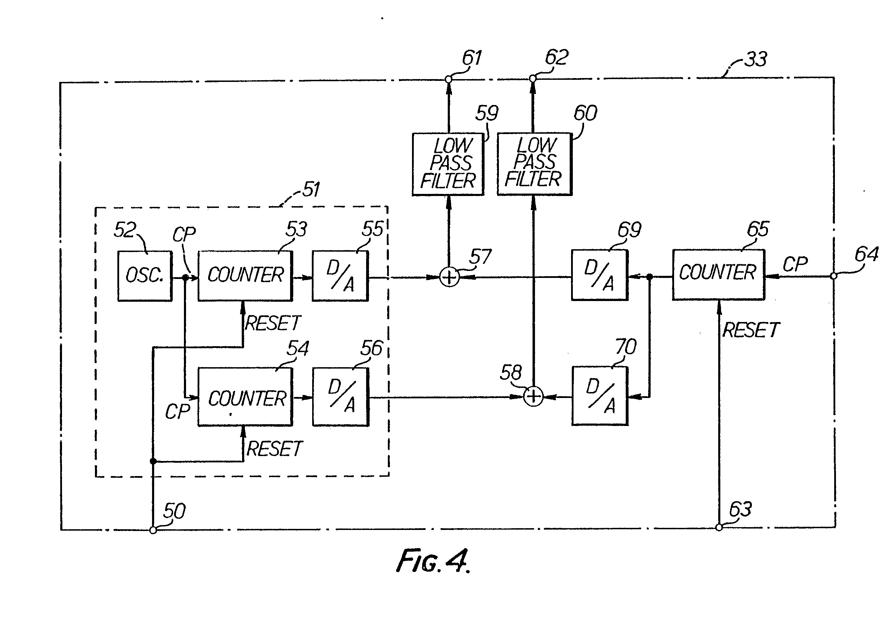

The operational circuit 33 which generates the displacing pattern will hereafter be explained. In Fig. 1, the rotating phase of video head 1 is detected by the magnet 3 and the rotating phase detector 5. The rotating head phase signals are delayed at the disk servo circuit 8, and the signals P are obtained. The signals P have the H level at the first field as shown in Fig. 3(a). The signals P are supplied to the operational circuit 33. A still pattern generator 51 which is part of the operational circuit 33 generates such movement quantity using the signals P. An embodiment of the operational circuit 33 is shown in Fig. 4. In Fig. 4, the signals P are supplied to the input terminal 50. The still pattern generator 51 consists of an oscillator 52, a counter 53, a counter 54, a D/A (digital-analog) converter 55, and a D/A converter 56. The control signals R reproduced from the control head 17 are supplied to the input terminal 63. The sub-control signals Q supplied from the rotating phase detector 20 are supplied to the input terminal 64. These input signals at the input terminals 50, 63, and 64 are supplied to the still pattern generator 51 and a counter 65. And these signals are derived from the the output terminal 61 and 62 through a D/A converter 69, a D/A converter 70, an adder 57, an adder 58, the low pass filter 59 and the low pass filter 60.

Now, the performance of the operation circuit 33 at still mode will be explained. The oscillator 52 oscillates 300 Hz pulse signals for example. The output pulses of the oscillator 52 are supplied to the CP terminal of the counter 53. A reset terminal of the counter 53 is connected to the input terminal 50. The counter 53 is activated by H level of the signals P and is reset by L level of the signals P. The output signals of the counter 53 are supplied to the output terminal 61 through the D/A converter 55, the adder 57 and the low pass filter 59.

The waveforms of the output signal are shown in Fig. 3(b). As the frequency of the oscillator 52 is 300 Hz and the period of the first field is about 16.6 m sec., about five pulses are supplied to the counter 53 during the period. When the video head 1 scans the starting point of the $A_1$ track, the control signal 39 is reproduced and the magnetic tape 23 is stopped. At that time, as the counter 65 is reset by the control signal 39, the D/A converter 69 generates zero level signal during the first field, and the adder 57 passes only the output signals of the D/A converter 55 shown in Fig. 3(b). These signals are supplied to the piezoelectric element 21 through voltage amplifier 31, the conductive brush 29 and the slip ring 26. In consequence, the video head 1 can trace the $A_1$ track with on-track condition during the first field.

If the magnetic tape 23 stops continuously, the video head 2 begins to scan the $A_1$ track after the video head 1 scanned the $A_1$ track. The azimuth of the video head 2 is also $+6°$. If the output terminal 62 provides the signals shown in Fig. 3(c), the video heads can scan the $A_1$ track with on-track condition during the second field. The output signals are supplied to the piezoelectric element 22 through the high voltage amplifier 32, a conductive brush 30 and a slip ring 27. In this case, the output pulses of the oscillator 52 are counted by the counter 54. The signal shown in Fig. 3 (c) is developed to the output terminal 62 through the D/A converter 56, the adder 58 and the low pass filter 60. The counter 54 is activated by L level of the signals P and is reset by H level of the signals P. As the magnetic tape 23 stops continuously, only the output signal of D/A converter 56 is supplied to the adder 58. The signals as shown in Fig. 3(b) and in Fig. 3(c) are called still pattern.

The above description is concerned with a case that the control signal 39 is reproduced by the control head, and the magnetic tape 23 starts stopping instantaneously.

Next, a case will be explained that the magnetic tape 23 stops when five sub-control signals Q are counted after the control signal 38 is reproduced. The still pattern generator 51 supplied to the adder 57 or 58 the still pattern such as shown in Fig. 3(b) or Fig. 3(c) according to the rotating phase of the video head (1) or (2), in spite of the tape speed of the magnetic tape 23. As ten sub-control signals Q are counted during one period between successive control signals, a fact that tape 23 stops after five sub-control signals Q are counted correspond to that the starting point of the video heads 1 and 2 is the start of $B_1$ track and the end point of the video heads 1 and 2 is the end of $A_1$ track.

By adding a certain bias voltage to the still pattern at the adders 57 and 58, the video heads 1 and 2 can trace the $A_1$ track with on-track condition. A method to obtain such bias voltage will be explained below. In the operational circuit 33, the terminal CP of the counter 65 is connected to the input terminal 64, being supplied with the sub-control signals Q. The reset terminal of the counter 65 is connected to the input terminal 63 being supplied with the control signals R. Then the counter 65 is reset by the control signals R and counts the sub-control signals Q. Now, the counter 65 is counting five sub-control signals Q. The bias voltage corresponding to the one pitch of the video track shown in Fig. 3(d) is obtained from D/A converters 69 and 70 which convert the output signals of the counter 65 to a form of the analog signals. This bias voltage is supplied to the adder 57 and 58. The output terminals 61 and 62 develop the signals as shown in Fig. 3(e) and Fig. 3(f) and the video heads 1 and 2 can trace the $A_1$ track with on-track condition.

The phases of video tracks against the video heads 1 and 2 are detected by the control signals R and the sub-control signals Q which divide the period of the control signal effectively and the signals P which indicate the rotating phase of the video heads 1 and 2. Even if the video tracks (that is the magnetic tape 23) stops at any phase against to the rotating locus of the video heads 1 and 2, the information of the phase is obtained. The video heads 1 and 2, can trace the tracks with on-track condition.

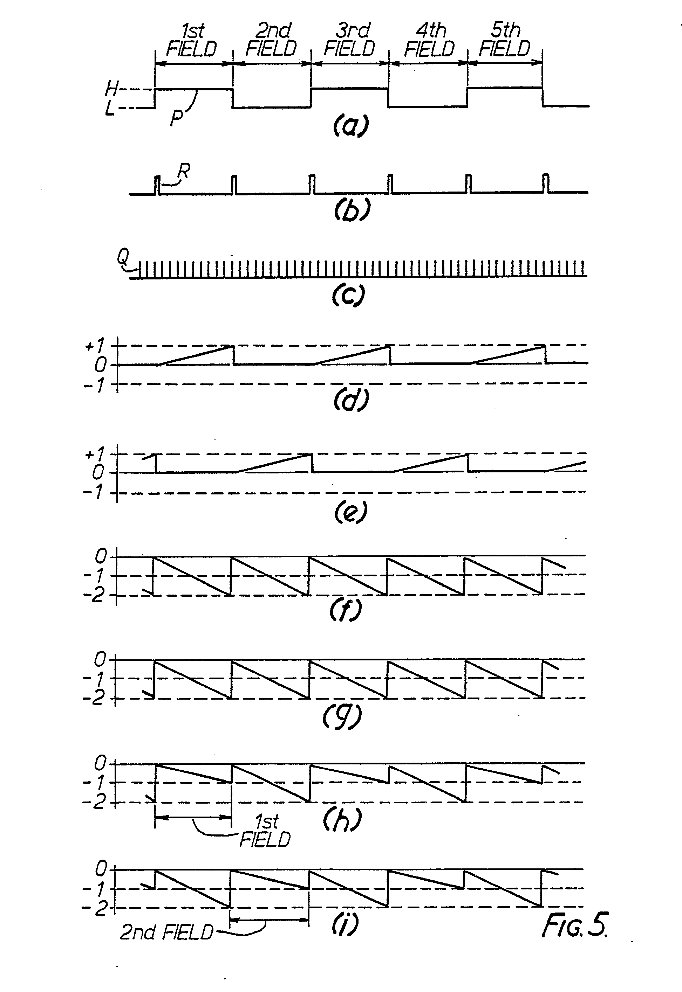

It will be described below that the concept described above is valid with an arbitrary tape speed. The case of a twice speed play back will be used. Fig. 5(a) shows the signals P which is the rotating phase of the video heads 1 and 2. Fig. 5(b) shows the phase of control signals R. Fig. 5(c) shows the phase of sub-control signals Q. These signals are applied to the input terminals 50, 63, 64 of the operational circuit 33. The signals shown in Fig. 5(d), Fig. 5(e), Fig. 5(f) and Fig. 5(g) are developed at the output terminal of the D/A converter 55, 56, 69 and 70. These signals are added to the adders 57 and 58, and are passed to the low pass filters 59 and 60. The signals shown in Fig. 5(h) and Fig. 5(i) are obtained at the output terminals 61, 62. The scale of vertical axis of these figures indicate the level which converts the number of the track pitches. The phase relationship shown in Fig. 5(a) and Fig. 5(b) indicates that the time of scanning the start point of $A_0$ track by the video head 1 coincides with the time of reproducing the control signal 38 by the control head 17.

If the displacing patterns are not supplied to the piezoelectric element 21, the trace end of the video head 1 is the end point of the $B_0$ track. That is to say, if the voltage corresponding to $-1$ pitch of the video track is supplied to the piezoelectric element 21 during the first field, the video head 1 can trace the video tracks with on-track condition. Fig. 5(h) shows that the operational circuit 33 develops the voltage corresponding to $-1$ pitch at end of the first field. At start point of the second field, the video head 2 traces the start point of $A_1$ track.

If the deflection patterns are not supplied to the piezoelectric element 22, the trace end of the video head 2 is the end point of the $B_0$ track. That is to say, if the voltage corresponding to $-1$ pitch of the video track, is supplied to the piezoelectric element 22 during the second field, the video head 2 can trace the video tracks with on-track conditions. Fig. 5(i) shows that the operational circuit 33 develops the voltage corresponding to $-1$ pitch at end of the second field. The example of double speed playback mentioned above shows a case that the rising edge or falling edge of the signals P coincide with the phase of the control signals R.

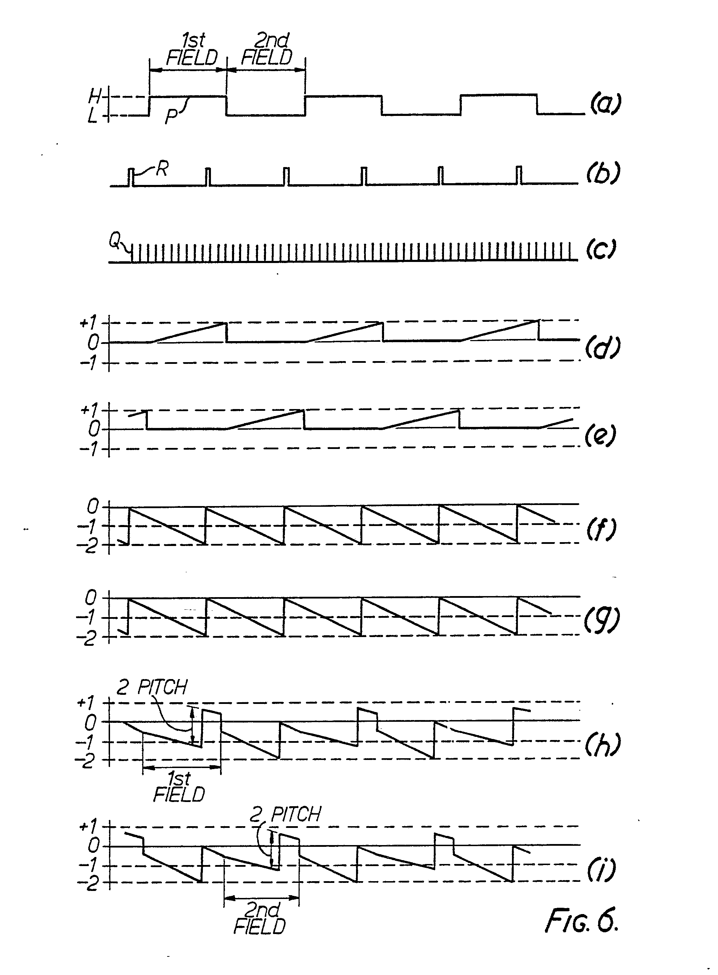

Fig. 6 shows a case that the phases are shifted at double speed playback. Fig. 6(a), Fig. 6(b) and Fig. 6(c) show the phase relation between the signals P and the control signals R and the sub-control signals Q. When these signals are applied to the input terminals 50, 63 and 64, the signals shown in Fig. 6(d), (e), (f) and (g) are developed at the output terminals of the D/A converters 55, 56, 69 and 70. And the signals shown in Fig. 6(h), (i) are supplied to the output terminals 61, 62 through the adders 57 and 58, and the low pass filters 59 and 60. Fig. 6(a), (b) and (c) show that the first field begins after three sub-control signals Q are counted. That is to say, the time of the third sub-control signal application coincides with the time when the scanning of the video track by the video head 1 starts.

The starting point of the first field shown in Fig. 6(h) is biased by amounts corresponding to three sub-control signals against to that of Fig. 5(h). This is the same concept of the still mode playback that the bias voltage is supplied when the starting point of the scanning of the video heads 1 and 2 is offset from $A_1$ track. The bias voltage is obtained by counting the sub-control signals Q. The operational circuit 33 develops the signals shown in Fig. 6(h). At the first half of the field, the video head 1 scans with on-track condition. At the latter half of first field, the control signal R is reproduced. As the counter 65 is reset by the control signal R shown in Fig. 6(f) and (g), the jumping whose amount equals to two video tracks occurs as shown in Fig. 6(h). By this jumping, the scanning locus is suddenly shifted from $A_1$ track to $A_2$ track. As the response of the piezoelectric element 21 has enough speed, the video head 1 scans the $A_1$ track with on-track condition and at the latter half of the field scans $A_2$ track with on-track condition. As shown in Fig. 6(i), at the second field the video head 2 can scan the track with on-track condition. The phase relations of the signals P and the control signals R and the sub-control signals Q are valid without regard to the tape speed of the magnetic tape 23. A magnetic head which responds to magnetic fluxes is suitable for the control head 32 to reproduce the control signals R at an arbitrary tape running speed.

As above mentioned, the phases of video tracks against the video heads are indicated by the reproduced control signals, the sub-control signals and the rotating phase of the video heads. The sub-control signals divide the interval of the control signals effectively. As the mechanical positions of the video heads are displaced by the phase information to scan the video tracks, the video heads can trace the video tracks with on-track condition in spite of the tape speed. And the reproduced pictures have no noise bar.

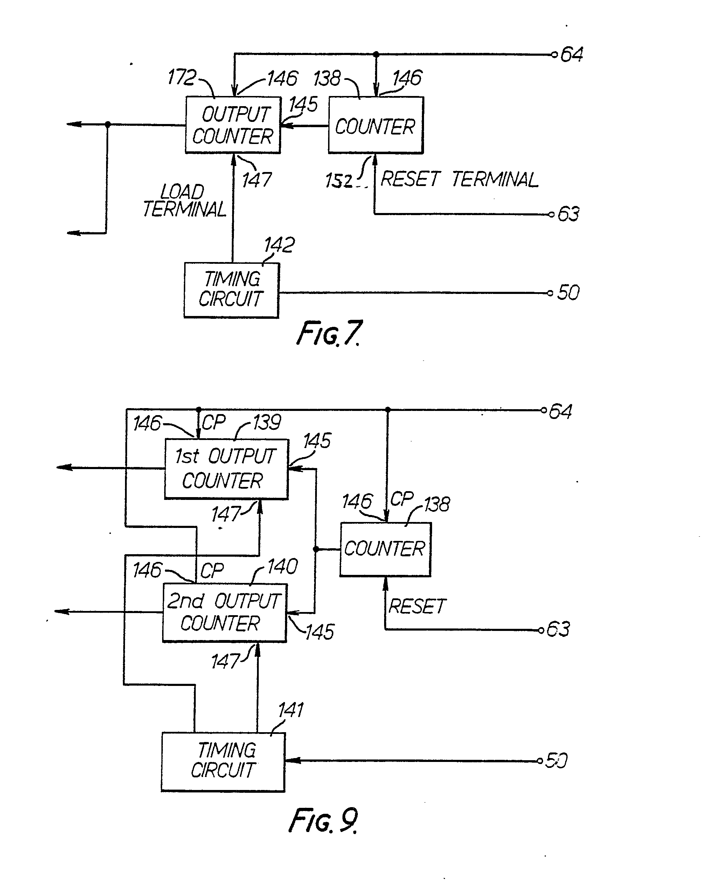

One more matter is preferably to be noted. The jumping from $A_1$ track to $B_1$ track, as above described, can possibly occur within a period of a field. When an electromechanical conversion element (piezoelectric element) does not have a sufficiently fast response, a limited time period is necessary for the above jumping. Such time period becomes a cause of noises on a TV screen. A technique for obtaining a noiseless reproduction image even in the case of such electromechanical conversion element having an insufficient response will be described below. A brief concept thereof is to add a limitation to the counter 65 that no jumping should occur within the time period of any one reproduction field. Fig. 7 shows an example of a counter having such limitation.

Referring to Fig. 7, it has an output counter 172 and a timing circuit 142 in addition to a counter 138 which functions in the same manner as the counter 65 of Fig. 4. The output counter 172 is presetted by the output of the counter 138 in accordance with the timing provided by the timing circuit 142. The output counter 172 then counts the above-described sub-control signals Q, and resetted by the above control signals R. The timing circuit 142 is driven by the rising and falling edges of the input P signals from the input terminal 50 for producing pulse signals S, which provide presetting timing of the output counter 172.

Reference numeral 146 is a count input terminal CP of the counter, 145 is a preset data input terminal, 147 is a load terminal, and 152 is a reset terminal. The above output counter 172 is connected to the D/A converters 69, 70 of Fig. 4.

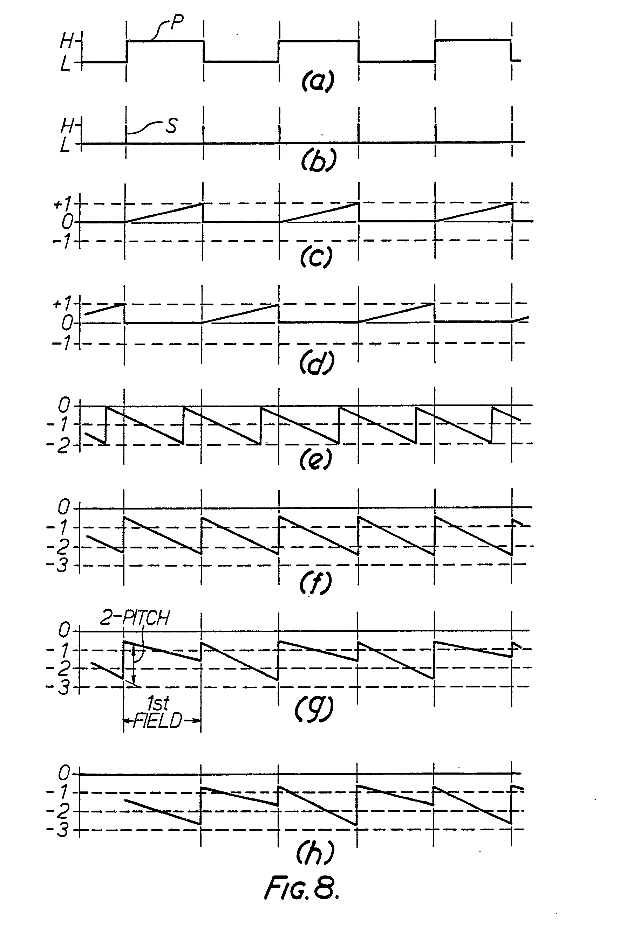

Fig. 8 shows signal waveforms at various points of the circuit of Fig. 7. Fig. 8(a), (c), (d), (e) correspond to Fig. 6(a), (d), (e), (f), respectively. Fig. 8(b) shows output pulse signals S of the timing circuit 142 of Fig. 7. Fig. 8(f) shows output signals of the output counter 172 presetted by the counter output values of the counter 138 of Fig. 8(e) in accordance with the timing of the output pulse signals S of Fig. 8(b). These output signals are added at the adders 57, 58 to the output signals of the D/A converters 55, 56 (namely the still pattern shown in Fig. 6(d), (e)) via the D/C converters 69, 70 of Fig. 4. Thus, signals as shown in Fig. 8(g), (h) are obtained at the output terminals 61, 62 of Fig. 4. The differences between thses signals and the signals of Fig. 6(h), (i) are that in the case of Fig. 8 the timing of 2-pitch jumping is limited to each edge of the P signals (namely the instances when the pulse signals S are generated). Since two-pitch jumping of the electromechanical conversion elements 21, 22 occurs within the vertical retracing period of reproduced video signals, such jumping does not cause an observable noise on a TV screen even if the electromagnetic conversion element does not have a very fast response.

Next, a technique for eliminating noises even in the vertical retracing period will be described. Noises in the vertical retracing period do not appear on a CRT screen. However, since such noises are in the vicinity of vertical sync signals, a synchronizing circuit contained in an television receiver (not shown) is likely to be mis-operated. Further, if the electromechanical conversion elements 21, 22 have a large mechanical resonance, the above two-pitch jumping is likely to influence also the CRT screen, not only the vertical retracing period.

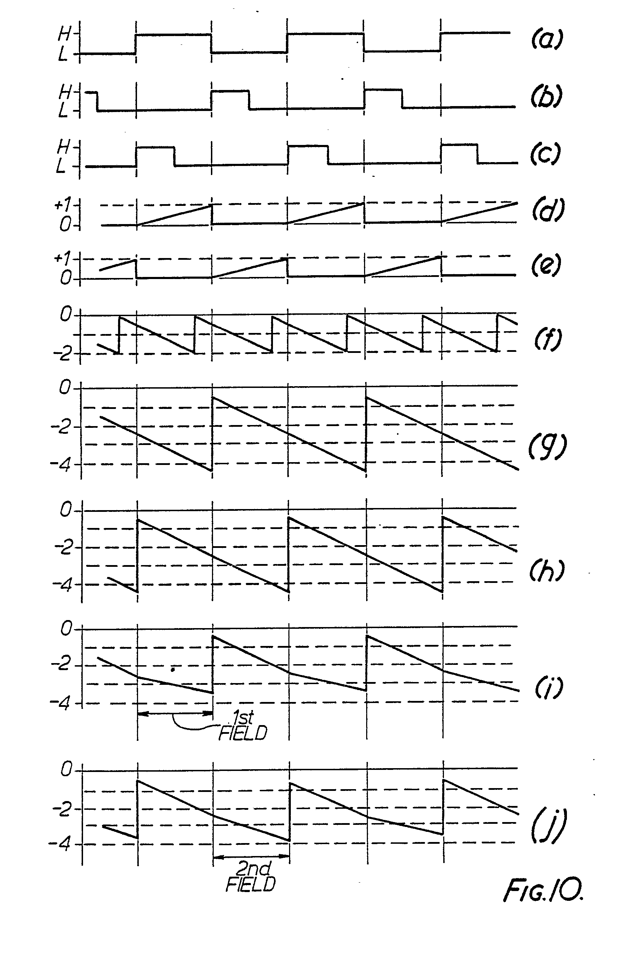

A technique for setting the timing of two-pitch jumping at a time point before the beginning of each field will be described below as a technique to overcome the above problems. As shown in Fig. 9, such technique is represented by an arrangement comprising a counter 138, a first output counter 139, a second output counter 140 and a timing circuit 147. The output signals of the first output counter 139 are applied to the D/A converter 69 of Fig. 4, and the output signals of the second output counter 140 are applied to the D/A converter 70.

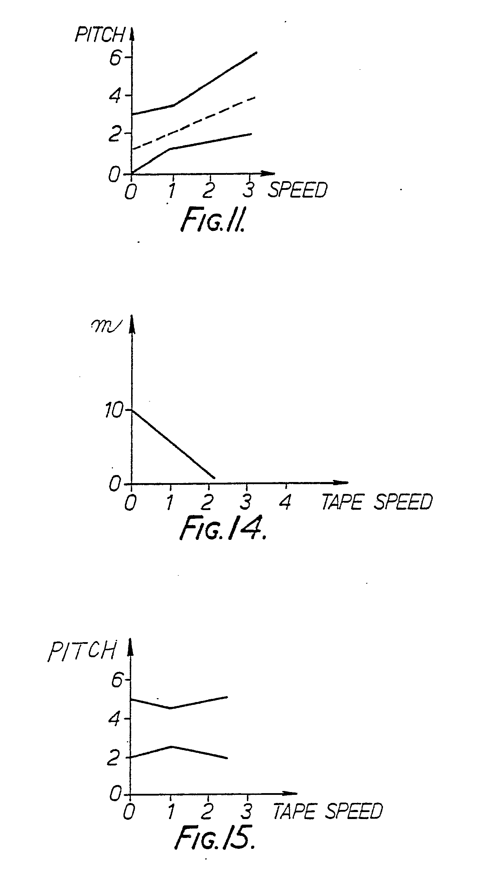

Waveforms appearing at various points of the circuit of Fig. 9 are shown in Fig. 10. In the case of Fig. 9, the period in which the jumping is to be carried out is set at a point at least 1/2 field before the beginning of the field. This period is the H level period in Fig. 10(b), (c), and these signals are individually applied to the two magnetic heads. These signals are generated by a timing circuit 141. Fig. 10(a), (b), (e), (f) correspond to Fig. 8(a), (c), (d), (e), respectively.

The output signals of the first output counter 139, the second output counter 140 are those shown in Fig. 10(g), (h). These outputs are added to the signals of Fig. 10(d), (e) by A/D converters 55, 56 of Fig. 4 just as in the case of Fig. 6(f), (g) (namely still pattern), so that signals as shown in Fig. 10(i), (j) are obtained at the output terminals 61, 62. As apparent from Fig. 10(i), (j), the jumping occurs at a point one field before the field begins. This is because the jumping of the counter 138 by control signals occurs outside the jumping performing periods of Fig. 10(b), (c). When the jumping of the counter 138 occurs in the H level periods of Fig. 10(b), (c), then at the same time the jumping occurs in the output counters 139, 140. However, the jumping does not occur at a position after 1/2 field before the beginning of the field even when the control signal is inputted in any phase relation with the P signals. So, the slow response of the electromechanical conversion elements 21, 22 or the ringing does not influence the field.

In the above descriptions, the period for performing jumping is set between one field before and 1/2 field before the beginning of the field. However, the end of such period can be extended to 1/10 field from the above-described 1/2 field if the electromechanical conversion elements 21, 22 have fast responses, and the ringing phenomenon is negligible.

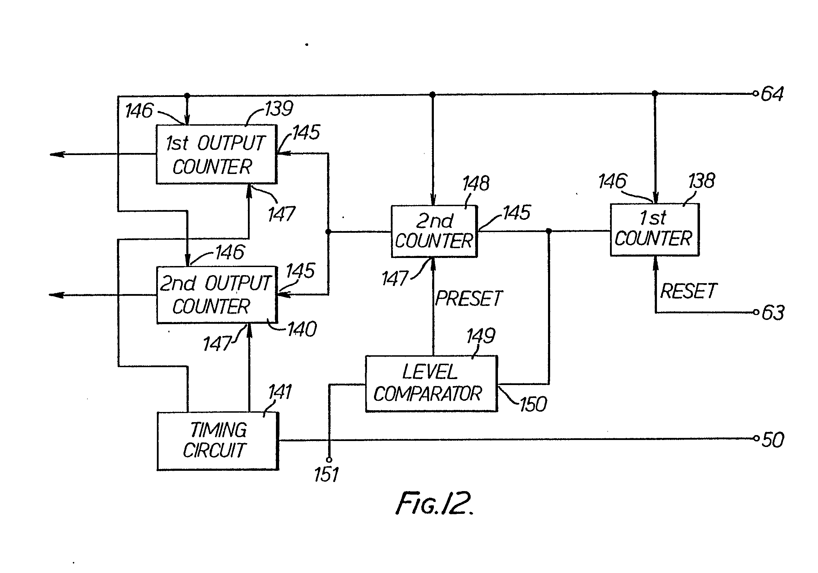

A technique for using the electromechanical conversion elements 21, 22 to keep a reasonable range at any tape speeds. Fig. 11 shows the area of upper peak level and lower peak level of the output signal generated by the circuit of Fig. 4 which includes the counter unit of Fig. 9. The area expands and the center of the area increases as tape speed becomes high. That is, Fig. 11 means the circuit of Fig. 9 cannot use most of the range of the electromechanical conversion elements 21, 22, which is limited by its own physical characteristics.

Large displacement of the electromechanical conversion elements 21, 22 worsen the touch of the video heads 1, 2 with the magnetic tape to decrease the output signal. That is, the video heads does not keep right angle to video track.

Next a technique for shifting the output range of the circuit of Fig. 9 will be described in order to limit the range of the electromechanical conversion elements 21, 22.

An embodiment of the technique is shown in Fig. 12, in which as a counter unit, second counter 148 and a level comparator 149 are added to the circuit of Fig. 9. The level comparator 149 compares the value of output of the first counter 138 with a value m which is inputted at the data input terminal 151. When the value of the output of first counter is equal to the data m, second counter is preset by the output values of the first counter 138. After that second counter 148 begins to count the sub-control signals.

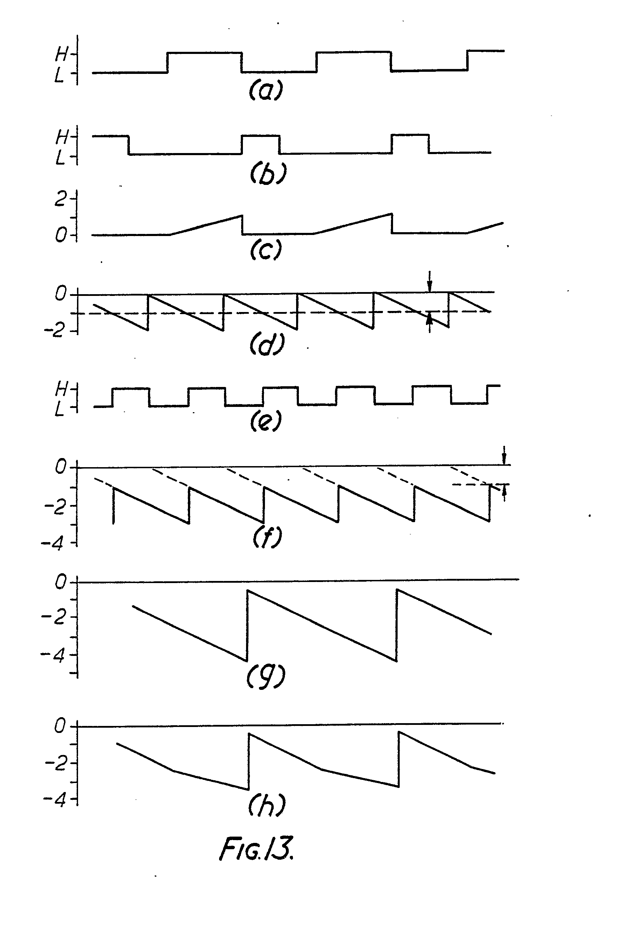

Fig. 13 shows signal waveforms at various points of the circuit of Fig. 12. Fig. 13(a), (b), (c) correspond to Fig. 10(a), (b), (d), respectively. Fig. 13(d) shows the relation between the data m and the input signal of the comparator 149. Fig. 13(e) shows output signal of the comparator 149. Fig.

13(f) is the output signals of the second counter 148 preset by the output values of the counter 138 in accordance with the timing of the positive edge of the output signal of the level comparator 149. Fig. 13(g) shows output signals of the output counter 172 preset by the output values of second counter 148 in accordance with the timing of the negative edge of the output signals of Fig. 13(b).

These output signals are converted to analog signals by the D/A converters 55, 56 and added to the output signal of the still pattern generator 51 at the adders 57, 58. As second counter 148 is preset by the output value of the first counter, which is equal to m, the waveform of the output signal of the second counter is biased by amounts corresponding to the value of m with respect to that of Fig. 10(f).

As mentioned above, the data m shifts the output signal of the operational circuit to keep the video heads in on-track condition at any tape speeds. Then, the value of the input data m which inputted at the terminal 151 is chosen in the range arbitrary which starts from 0 to the maximum count value of first counter 138. In this case the value of maximum count is 10. Accordingly, the range of the output signal of the operational circuit 33 can be shifted 10 counts of the sub-control signals, i.e. shifted 2 track pitches. If the value of data m is selected according to the tape speed as shown in Fig. 14, the output signal of the operational circuit 33 changes as shown in Fig. 15. Fig. 15 shows that, the center of the range of the output keeps constant regardless of the tape speed, and the area of upper peak level and lower peak level expand equally as tape speed becomes high.

**Claims**

1. A tracking system for video recorders/reproducers employing a record medium having tracks for recording video signals and control signals which are representative of the record position of said video signals, said system comprising:

transducing means (1, 2) for reproducing video signals recorded along said track on said record medium;

positionable means (21, 22) with said transducing means mounted at a location thereon, said positionable means being movable at said location for displacing position of said transducing means;

control signal reproducing means (17) to reproduce said control signals recorded along said track on said record medium;

means (20) for dividing the interval between said control signals, said dividing means developing sub-control signals, the number of which is representative of the transported length of said record medium;

a rotating phase detector (5) for detecting the rotating phase of said transducing means;

an operational means (33) for developing a displacement pattern signal which is representative of the location of said video track recorded on said record medium against said transducing means by using said control signal, said sub-control signal, and the output signal of said rotating phase detector; and

means (26—32) for supplying said displacement pattern signal to said positionable means, wherein: said operational means comprises 1) a still pattern generator (51) for developing a still pattern signal whose quantity is zero at beginning of scanning of said transducing means and whose quantity corresponds to one track pitch at end of scanning of said transducing means, 2) a counter unit (65) for counting said sub-control signals and generating bias signals, and 3) an adder (57, 58) which adds the output signals of said still pattern generator and the output of said counter unit (65) developing said displacing pattern signal; and

said counter unit (65) has 1) a first counter (138) which is reset by said control signals and counts said sub-control signals, 2) a second counter (148) which is preset to a certain value m when an output signal of said first counter becomes larger than m and counts said sub-control signals, and 3) third counters (139, 140) each of which is preset to an output signal of said second counter at a certain timing and counts said sub-control signals, outputs of said third counters (139, 140) being applied to said adder, whereby said transducing means is capable of tracking properly on said recorded video track at an arbitrary transporting speed of said record medium.

2. A tracking system as claimed in claim 1, wherein said dividing means (20) comprises: a rotary disk (19) which rotates with running of said record medium; and a pulse generator which develops pulse signals in proportion to the rotating angle of said rotary disk (19).

3. A tracking system as claimed in claim 1, wherein said control signal reproducing means comprises a magnetic head (17) which is type of responding with magnetic fluxes.

**Revendications**

1. Système d'alignement pour enregistreurs/reproducteurs vidéo ou magnétoscopes utilisant un support d'enregistrement qui comporte des pistes pour enregistrer des signaux vidéo et des signaux de commande représentant la position d'enregistrement des signaux vidéo, ce système comprenant:

des moyens transducteurs (1, 2) pour reproduire des signaux vidéo enregistrés le long de la piste sur le support d'enregistrement;

des moyens pouvant être positionnés (21, 22) sur un emplacement desquels sont montés les moyens transducteurs, les moyens pouvant être positionnés étant mobiles à l'emplacement pour déplacer la position des moyens transducteurs;

un moyen de reproduction de signaux de commande (17) pour reproduire les signaux de commande enregistrés le long de la piste sur le support d'enregistrement;

un moyen (20) pour diviser l'intervalle entre les signaux de commande, ce moyen de division produisant des signaux de sous-commande dont le nombre représente la longueur transportée du support d'enregistrement;

un détecteur de phase tournante (5) pour détecter la phase tournante des moyens transducteurs;

un moyen opérationnel (33) pour produire un signal de modèle de déplacement représentant l'emplacement de la piste vidéo enregistrée sur le support d'enregistrement contre les moyens transducteurs en utilisant le signal de commande, le signal de sous-commande, et le signal de sortie du détecteur de phase tournante; et

des moyens (26—32) pour fournir le signal de modèle de déplacement aux moyens pouvant être positionnés, dans lequel: le moyen opérationnel comprend 1) un générateur de modèle fixe (51) pour produire un signal de modèle fixe dont la quantité est nulle au commencement de l'analyse des moyens transducteurs et dont la quantité correspond à un pas de piste à la fin de l'analyse des moyens transducteurs, 2) une unité de comptage (65) pour compter les signaux de sous-commande et engendrer des signaux de déviation, et 3) un additionneur (57, 58) qui additionne les signaux de sortie du générateur de modèle fixe et le signal de sortie de l'unité de comptage (65) produisant le signal de modèle de déplacement; et dans lequel,

l'unité de comptage (65) comporte 1) un premier compteur (138) qui est remis à zéro par les signaux de commande et qui compte les signaux des sous-commande, 2) un second compteur (148) qui est préréglé à une certaine valeur m quand un signal de sortie du premier compteur devient supérieur à m et qui compte les signaux de sous-commande, et 3) des troisièmes compteurs (139, 140) dont chacun est préréglé à une valeur de signal de sortie du second compteur à une certain synchronisation et qui comptent les signaux de sous-commande, les signaux de sortie des trois compteurs (139, 140) étant appliqués à l'additionneur, les moyens transducteurs étant ainsi capables de suivre correctement la piste vidéo enregistrée en se trouvant sur celle-ci à une vitesse de transport arbitraire du support d'enregistrement.

2. Système d'alignement selon la revendication 1, où le moyen de division (20) comprend: un disque rotatif (19) tourne quand le support d'enregistrement est en mouvement, et un générateur d'impulsion qui produit des signaux pulsés proportionnellement à l'angle de rotation du disque rotatif (19).

3. Système d'alignement selon la revendication 1, où ledit moyen de reproduction de signaux de commande comprend une tête magnétique (17) qui est du type répondant aux flux magnétiques.

**Patentansprüche**

1. Nachführsystem für Video-Aufnahme-/Wiedergabe-Geräte, die ein Aufzeichnungsmedium verwenden, die Spuren zum Aufzeichnen von Videosignalen und Steuersignalen, die für die Aufzeichnungsposition der Videosignale kennzeichnend sind, aufweisen, enthaltend:

Wandler (1, 2) zum Wiedergeben von Videosignalen, die längs der Spur auf dem Aufzeichnungsmedium aufgezeichnet sind,

verstellbare Einrichtungen (21, 22) an den Wandlern, die an einer Stelle derselben montiert sind und die an dieser Stelle beweglich einstellbar sind, um die Position der Wandler zu verändern,

eine Steuersignalwiedergabeeinrichtung (17) zum Wiedergeben der längs der Aufzeichnungsspur auf dem Aufzeichnungsmedium aufgezeichneten Steuersignale,

Einrichtungen (20) zum Teilen des Intervalls zwischen den Steuersignalen, wobei die Teilereinrichtungen Sub-Steuersignale entwickeln, deren Zahl für die bewegte Länge des Aufzeichnungsmediums kennzeichnend ist,

einen Drehphasendetektor (5) zum Ermitteln der Drehphase der Wandler,

eine Betriebseinrichtung (33) zum Entwickeln eines Verschiebungsmustersignals, das für den Ort der auf dem Aufzeichnungsmedium aufgezeichneten Videospur in bezug auf die Wandler kennzeichnend ist, unter Benutzung des Steuersignals, des Sub-Steuersignals und des Ausgangssignals des Drehphasendetektors, und

Einrichtungen (26 bis 32) zum Zuführen des Verschiebemustersignals zu den Verstelleinrichtungen, wobei: die Betriebseinrichtung enthält 1) einen Stillstandsmustergenerator (51) zum Entwickeln eines Stillstandsmustersignals, dessen Größe am Beginn der Abtastung der Wandler Null ist und dessen Größe einer Spurteilung am Ende der Abtastung der Wandler ist, 2) eine Zählereinheit (65) zum Zählen der Sub-Kontrollsignale und zum Erzeugen von Vor-Signalen, und 3) einen Addierer (57, 58), der die Ausgangssignale des Stillstandsmustergenerators und den Ausgang der Zählereinheit (65) addiert und das Stillstandsmustersignal erzeugt und

wobei die Zählereinheit (65) aufweist 1) einen ersten Zähler (138), der durch die Steuersignale rückgestellt wird und der die Sub-Steuersignale zählt, 2) einen zweiten Zähler (148), der auf einen bestimmten Wert m voreingestellt wird, wenn ein Ausgangssignal des ersten Zählers größer als m wird und der die Sub-Steuersignale zählt und 3) dritte Zähler (139, 140), von denen jeder auf ein Ausgangssignal des zweiten Zählers zu einem gewissen Zeitpunkt voreingestellt wird und die Sub-Steuersignale zählt, wobei die Ausgänge der dritten Zähler (139, 140) dem Addierer zugeführt sind, wodurch die Wandler in der Lage sind, die aufgezeichnete Videospur bei einer mittleren Bewegungsgeschwindigkeit des Aufzeichnungsmediums in geeigneter Weise zu verfolgen.

2. Nachführsystem nach Anspruch 1, bei dem die Teilereinrichtung (20) enthält eine rotierende Scheibe (19), die mit der Laufgeschwindigkeit des Aufzeichnungsmediums rotiert, und einen Impulsgenerator, der Impulssignale proportional zum Drehwinkel der rotierenden Scheibe (19) erzeugt.

3. Nachführsystem nach Anspruch 1, bei dem die das Steuersignal abspielende Einrichtung einen Magnetkopf (17) enthält, der von solcher Art ist, daß er auf den magnetischen Fluß anspricht.

*Fig. I.*

Fig.2.

FIG. 3.

FIG. 4.

0 043 739

FIG. 5.

FIG. 6.

Fig. 7.

Fig. 9.

FIG. 8.

FIG.10.

PITCH

6

4

2

0

0   1   2   3   SPEED

*FiG.11.*

m

10

0

0   1   2   3   4   TAPE SPEED

*FiG.14.*

PITCH

6

4

2

0

0   1   2   3   TAPE SPEED

*FiG.15.*

Fig. 12.

FIG.13.